# EUROPEAN PATENT APPLICATION

(11) **EP 1 912 109 A1**
(43) Date of publication of application: **16.04.2008**
(21) Application number: 06121142.1
(22) Date of filing: 22.09.2006
(51) Int. Cl.: G06F 1/16, G06F 3/01

(54) **System and method for adjusting icons, text and images on an electronic device**

(71) Applicant: Research In Motion Limited, Waterloo, Ontario N2L 3W8 (CA)
(72) Inventor: Orr, Kevin, Elmira, Ontario N3B 3C9 (CA); Fyke, Steven Henry, Waterloo, Ontario N2J 4T3 (CA)
(74) Representative: Rickard, David John

(57) **Abstract**

The invention relates to a system, method and device for controlling the display of elements on a display on an electronic device, according to movement of the device. In the system, a displayed element management system is provided. The system comprises: a sensor; a movement detection module connected to the sensor providing a movement signal registering a notable signal from the sensor; and a displayed element adjustment module to determine a larger size for the elements being displayed on the display after processing the movement signal provided by the movement detection module.

## Description

The invention described herein generally relates to a system and method for selectively adjusting presentation of an element generated on a display of an electronic device. In particular, the invention described herein relates to making adjustments to the size (and possibly the position and location) of icons, graphics and text according to a movement of the device.

Current wireless handheld mobile communication devices perform a variety of functions to enable mobile users to stay current with information and communications, such as e-mail, corporate data and organizer information while they are away from their desks. Such devices have displays and sophisticated operating systems providing Graphical User Interfaces (GUIs) that impart status information about applications and services provided by the devices to the user.

Typical GUIs employ a metaphor of a "desktop" where icons relating to applications and files are generated and placed on the "desktop". A prevalent desktop metaphor is the GUI interface provided in the Microsoft Windows (trade-mark) operating systems.

In a handheld device, the desktop metaphor for a GUI is useful, but it has limitations. As a portable device is often used while the user is moving or travelling (e.g. in a car), the preset presentation of icons, graphics and text may not be as readable in the moving environment. The icons and text of prior art GUI interfaces do not accommodate for movement of the device.

There is a need for a system and method which addresses deficiencies in the prior art.

### BRIEF DESCRIPTION OF THE DRAWINGS

The invention will now be described, by way of example only, with reference to the accompanying drawings, in which:

- Fig. 1: is a schematic representation of an electronic device having a graphical user interface with a displayed element adjustment system in accordance with an embodiment;

- Fig. 2: is a block diagram of certain internal components and the displayed element adjustment system in the device in Fig. 1;

- Fig. 3: is a schematic representation of the device of Fig. 1 with its display showing a plurality of applications including an address book, a calendar, an e-mail message module, a cellphone module and a GPS module according to an embodiment;

- Fig. 4A: is a schematic representation of the device of Fig. 1 showing on its display one arrangement of icons produced during execution of the displayed element adjustment system of an embodiment;

- Fig. 4B: is a schematic representation of the device of Fig. 1 showing on its display another arrangement of icons produced during execution of the displayed element adjustment system of an embodiment;

- Fig. 4C: is a schematic representation of the device of Fig. 1 showing on its display yet another arrangement of icons produced during execution of the displayed element adjustment system of an embodiment;

- Fig. 4D: is a schematic representation of the device of Fig. 1 showing on its display an arrangement elements in an application produced during execution of the displayed element adjustment system of an embodiment;

- Fig. 5: is a state diagram of functions performed in processing elements displayed on a display according to an embodiment of Figs. 1 and 2;

- Fig. 6: is a block diagram of two separate movement detection systems of the embodiment of Fig. 1; and

- Fig. 7: is a block diagram of an alternative movement detection system the embodiment of Fig. 1.

### DESCRIPTION OF PREFERRED EMBODIMENTS

The description which follows and the embodiments described therein are provided by way of illustration of an example or examples of particular embodiments of the principles of the present invention. These examples are provided for the purposes of explanation and not limitation of those principles and of the invention. In the description which follows, like parts are marked throughout the specification and the drawings with the same respective reference numerals.

In a first aspect of an embodiment, a display management system for an element displayed on a display of an electronic device may be provided. The system may comprise: a sensor; a movement detection module connected to the sensor providing a movement signal indicating a notable signal from the sensor; and a displayed element adjustment module for generating the element on the display in a larger size after processing the movement detection signal.

In the system, the displayed element adjustment module may re-adjust the element to a smaller size from the larger size after a reset event.

In the system, the reset event may be a passage of predetermined amount of time.

In the system, the element may be an icon.

In the system, the displayed element adjustment module may also adjust a font size of text associated with the icon to a larger font size after processing the movement detection signal.

In the system, the displayed element adjustment module may also adjust a background feature associated with the icon to after processing the movement detection signal.

In the system, the displayed element adjustment module may also re-adjust the larger font size and the background feature after the reset event.

The system may further comprise a GUI module to allow a user to set parameters for adjusting and re-adjusting the element.

In the system the sensor may by a motion sensor. Also, the displayed element adjustment module may further control a backlight for the display. Alternatively, the sensor may be a global positioning system sensor.

In a second aspect, a method for adjusting presentation of an element displayed on a display of an electronic device may be provided. The method may comprise: monitoring for a notable movement of the device; and when the notable movement has been detected, generating the element in a larger size on the display after processing the movement detection signal.

The method may further comprise re-adjusting the element to a smaller size from the larger size after a reset event.

In the method, the reset event may be a passage of predetermined amount of time.

In the method, the element may be an icon.

The method may further comprise adjusting a font size of text associated with the icon to a larger font size after processing the movement detection signal.

The method may further comprise adjusting a background feature associated with the icon after processing the movement detection signal.

In a third aspect, a portable electronic device may be provided. The device may comprise: a sensor; a display; software controlling an element generated by an application on the display; a movement detection module connected to the sensor providing an orientation signal registering a notable signal from the sensor; and a displayed element adjustment module generating a larger size for the elements being displayed on the display utilizing orientation data provided by the movement detection module.

In other aspects, various combinations of sets and subsets of the above aspects may be provided.

Generally, an embodiment may provide a system and method of adjusting the presentation icons, text and graphics on a display of an electronic device, based on whether the device is being moved. Movement of the device can be determined by a movement detection module. Depending on the determined movement of the device elements in the GUI displayed on the device can be adjusted to address readability issues of the elements while the device is being moved. This can be achieved by changing the position of one or more icons / text / dialog boxes being displayed on the GUI.

Exemplary details of aspect of embodiments are provided herein. First, a description is provided on general concepts and features of an embodiment. Then, further detail is provided on control features relating to a displayed element adjustment module.

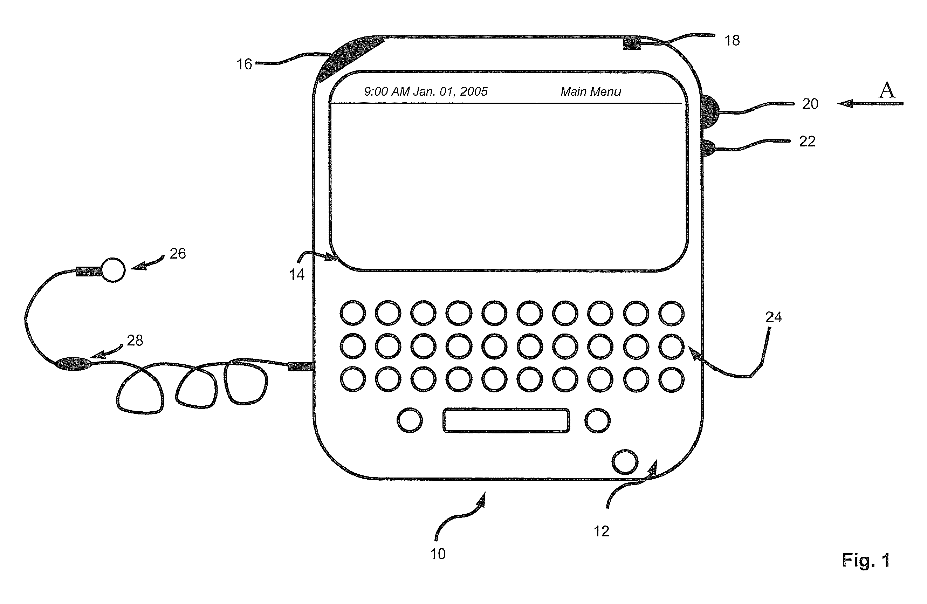

Fig. 1 provides general features of an electronic device for receiving electronic communications in accordance with an embodiment of the invention, which is indicated generally at 10. In the present embodiment, electronic device 10 is based on a computing platform having functionality of an enhanced personal digital assistant with cellphone and e-mail features. It is, however, to be understood that electronic device 10 can be based on construction design and functionality of other electronic devices, such as smart telephones, desktop computers pagers or laptops having telephony equipment. In a present embodiment, electronic device 10 includes a housing 12, an LCD 14, speaker 16, an LED indicator 18, a trackwheel 20, an ESC ("escape") key 22, keypad 24, a telephone headset comprised of an ear bud 26 and a microphone 28. Trackwheel 20 and ESC key 22 can be inwardly depressed along the path of arrow "A" as a means to provide additional input to device 10.

It will be understood that housing 12 can be made from any suitable material as will occur to those of skill in the art and may be suitably formed to house and hold all components of device 10.

Device 10 is operable to conduct wireless telephone calls, using any known wireless phone system such as a Global System for Mobile Communications ("GSM") system, Code Division Multiple Access ("CDMA") system, Cellular Digital Packet Data ("CDPD") system and Time Division Multiple Access ("TDMA") system. Other wireless phone systems can include Bluetooth and the many forms of 802.11 wireless broadband, like 802.11a, 802.11b, 802.11g, etc. that support voice. Other embodiments include Voice over IP (VoIP) type streaming data communications that can simulate circuit switched phone calls. Ear bud 26 can be used to listen to phone calls and other sound messages and microphone 28 can be used to speak into and input sound messages to device 10.

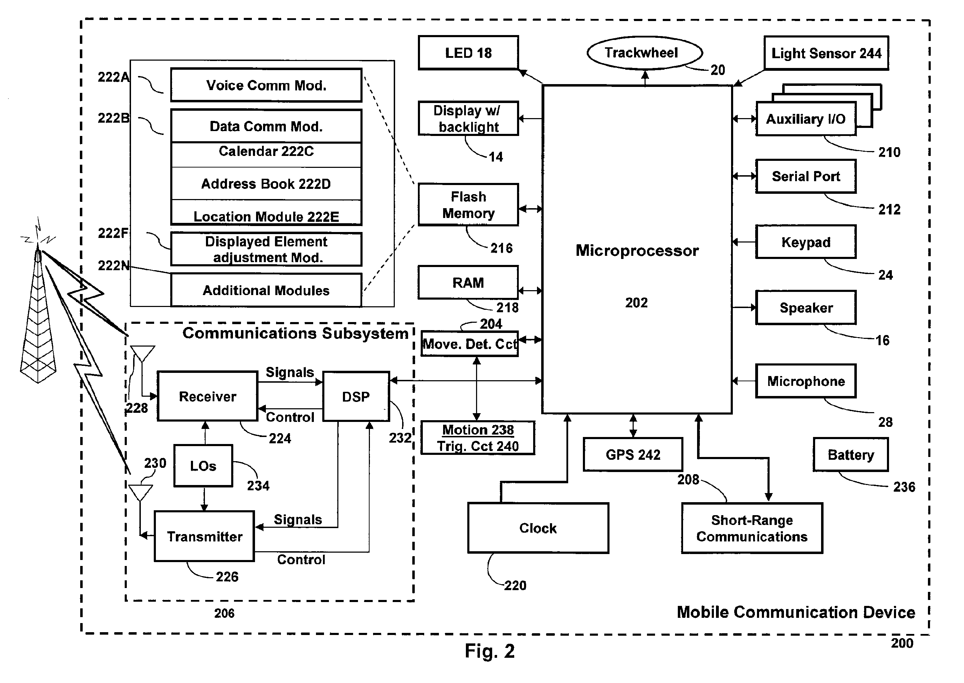

Referring to Fig. 2, functional components of device 10 are provided in schematic 200. The functional components are generally electronic, structural or electromechanical devices. In particular, microprocessor 202 is provided to control and receive almost all data, transmissions, inputs and outputs related to device 10. Microprocessor 202 is shown schematically as coupled to keypad 24 and other internal devices. Microprocessor 202 preferably controls the overall operation of the device 10 and its components. Exemplary microprocessors for microprocessor 202 include Data 950 (trade-mark) series microprocessors and the 6200 series microprocessors, all available from Intel Corporation. Microprocessor 202 is connected to other elements in device 10 through a series of electrical connections to its various input and output pins. Microprocessor 202 has an IRQ input line which allows it to receive signals from various devices. Appropriate interrupt firmware is provided which receives and reacts to the signals detected on the IRQ line. Movement detection module 204 provides analysis of input signals to determine the whether device 10 is being moved.

In addition to microprocessor 202, other internal devices of the device 10 are shown schematically in Fig. 2. These include: display 14; speaker 16; keypad 24; communication sub-system 206; short-range communication sub-system 208; auxiliary I/O devices 210; serial port 212; microphone 28; flash memory 216 (which provides persistent storage of data); random access memory (RAM) 218; internal clock 220 to track and synchronize applications and other device sub-systems (not shown); global positioning unit 242 and light sensor 244. Device 10 is preferably a two-way radio frequency (RF) communication device having voice and data communication capabilities. In addition, device 10 preferably has the capability to communicate with other computer systems via the Internet.

Operating system software executed by the microprocessor 202 is preferably stored in a computer readable medium, such as flash memory 216, but may be stored in other types of memory devices, such as read only memory (ROM) or similar storage element. In addition, system software, specific device applications, or parts thereof, may be temporarily loaded into a volatile store, such as RAM 218. Communication signals received by the mobile device may also be stored to RAM 218.

Microprocessor 202, in addition to its operating system functions, enables execution of software applications on device 10. A set of software (or firmware) applications, referred to generally as applications 222, that control basic device operations, such as voice communication module 222A and data communication module 222B, may be installed on the device 10 during manufacture or downloaded thereafter. As well, additional software modules, which may be for instance a personal information manager (PIM) application, may be installed during manufacture or downloaded thereafter into device 10. Data associated with each application can be stored in flash memory 216.

Displayed element adjustment module 222F provides control and adjustment of icons, text and background images produced on display 14 by an application 222, utilizing movement information provided by movement detection module 204. Data and files relating to the elements displayed on a GUI (e.g. icons, text, backgrounds for icons, graphics, dialog boxes, and sizing information of these elements) may be stored in memory 216 or 218. The data may be accessed and modified by module 222F; the files (e.g. icon graphics files) may preferably only be accessed by module 222F.

Communication functions, including data and voice communications, are performed through the communication sub-system 206 and the short-range communication sub-system 208. Collectively, sub-systems 206 and 208 provide the signal-level interface for all communication technologies processed by device 10. Various applications 222 provide the operational controls to further process and log the communications. Communication sub-system 206 includes receiver 224, transmitter 226 and one or more antennas, illustrated as receive antenna 228 and transmit antenna 230. In addition, communication sub-system 206 also includes processing module, such as digital signal processor (DSP) 232 and local oscillators (LOs) 234. The specific design and implementation of communication sub-system 206 is dependent upon the communication network in which device 10 is intended to operate. For example, communication sub-system 206 of device 10 may operate with the Mobitex (trade-mark), DataTAC (trade-mark) or General Packet Radio Service (GPRS) mobile data communication networks and also operate with any of a variety of voice communication networks, such as Advanced Mobile Phone Service (AMPS), Time Division Multiple Access (TDMA), Code Division Multiple Access CDMA, Personal Communication Service (PCS), Global System for Mobile Communication (GSM), etc. Other types of data and voice (telephonic) networks, both separate and integrated, may also be utilized with device 10. In any event, communication sub-system 206 provides device 10 with the capability of communicating with other devices using various communication technologies, including instant messaging (IM) systems, text messaging (TM) systems and short message service (SMS) systems.

In addition to processing communication signals, DSP 232 provides control of receiver 224 and transmitter 226. For example, gains applied to communication signals in receiver 224 and transmitter 226 may be adaptively controlled through automatic gain control algorithms implemented in DSP 232.

In a data communication mode, a received signal, such as a text message or web page download, is processed by the communication sub-system 206 and is provided as an input to microprocessor 202. The received signal is then further processed by microprocessor 202 which can then generate an output to display 14 or to an auxiliary I/O device 210. A device user may also compose data items, such as e-mail messages, using keypad 24, trackwheel 20 and/or some other auxiliary I/O device 210, such as a touchpad, a rocker switch, a separate trackwheel or some other input device. The composed data items may then be transmitted over communication network 140 via communication sub-system 206. Sub-system 206 may also detect when it is out of communication range for its remote systems.

In a voice communication mode, overall operation of device 10 is substantially similar to the data communication mode, except that received signals are output to speaker 16, and signals for transmission are generated by microphone 28. Alternative voice or audio I/O sub-systems, such as a voice message recording sub-system, may also be implemented on device 10. In addition, display 14 may also be utilized in voice communication mode, for example, to display the identity of a calling party, the duration of a voice call, or other voice call related information.

Short-range communication sub-system 208 enables communication between device 10 and other proximate systems or devices, which need not necessarily be similar devices. For example, the short-range communication sub-system may include an infrared device and associated circuits and components, or a Bluetooth (trade-mark) communication module to provide for communication with similarly-enabled systems and devices.

Powering the entire electronics of the mobile handheld communication device is power source 236. Preferably, the power source 236 includes one or more batteries. More preferably, the power source 236 is a single battery pack, especially a rechargeable battery pack. A power switch (not shown) provides an "on/off" switch for device 10. Upon activation of the power switch an application 222 is initiated to turn on device 10. Upon deactivation of the power switch, an application 222 is initiated to turn off device 10. Power to device 10 may also be controlled by other devices and by software applications 222.

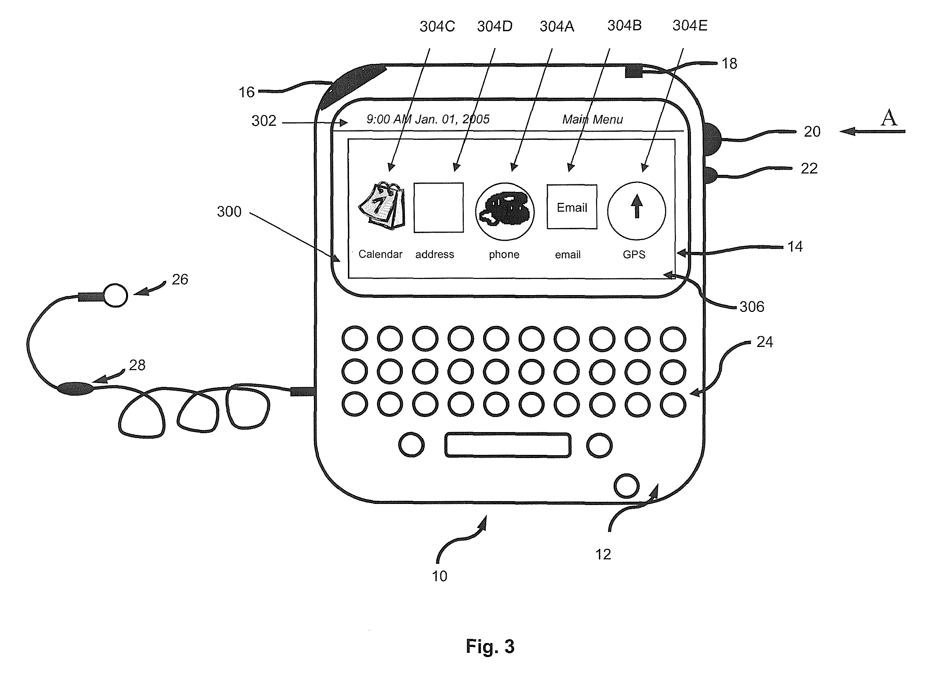

Referring now to Fig. 3, device 10 is shown in operation where applications 222 stored or operating thereon are being executed. A screen image is generated on the display showing operational aspects of device 10 and is comprised of several elements, including icons, text, backgrounds for icons, background images, dialog boxes, pop-up windows, etc. In screen 300, for example, applications generate and control aspects of screen 300. Therein, time and date region 302 is displayed providing time and date information which is updated according to internal clock 220. Screen 300 has several applications presented thereon through separate icons 304, which individually represent separate applications 222. An icon is used to represent an application, file, folder or object stored or processed by the device. For the purposes of the description of an embodiment herein, the term "element" refers to any text or graphic element that is displayed on screen 300, including, for example: an icon, text, graphics alone, text alone, or a combination of graphics and text, which represents an associated application, file, folder, dialog box, etc. Typically, a dialog box provides a contained GUI "window" allowing the user to provide some type of input or selection or it may be a "pop-up" window provide information to the user. A background pattern is provided, such that the icons 304 are generated "on top" of background pattern.

Using either specific keystrokes on keypad 24 or trackwheel 20, the icons can be sequentially highlighted and selected. In particular, to select and activate a particular application, once the icon is highlighted, it can be selected by clicking trackwheel 20 inwardly along the path of arrow A. ESC key 22 can be used to exit any application by pressing inwardly, along the path of arrow A, on ESC key 22. Generally, when no selected application is running in the "foreground" of device 10, (i.e. actively operating and generating its GUIs on the display after being explicitly activated by either the user or an internal command within device 10), then screen 300 is generated on display 14. A brief description of functional aspects of selected applications is provided.

Telephone application 222A (which is associated with icon 304A) provides an interface to allow the user of device 10 to initiate a telephone call on device 10. It also provides a GUI to store and list a record of telephone calls made, telephone calls received and voice-mail messages stored by device 10.

Email application 222B (which is associated with icon 304B) provides modules to allow user of device 10 to generate email messages on device 10 and send them to their addressees. Application 222B also provides a GUI which provides a historical list of emails received, drafted, saved and sent.

Calendar 222C (which is associated with icon 304C) tracks appointments and other status matters relating to the user and device 10. It provides a daily/weekly/month electronic schedule of appointments, meetings and events as entered by the user. Calendar 222C tracks time and day data for device 10 using processor 202 and internal clock 220. The schedule contains data relating to the current availability of the user. For example it can indicate when the user is busy, not busy, available or not available. The application can also provide a "do not disturb" window of time for a user. Effectively, calendar 222C allows device 10 to be set to not notify the user when an interrupt event occurs, in spite of any lack of scheduled appointments during that window.

Address book 222D (which is associated with icon 304D) enables device 10 to store contact information for persons and organizations. In particular, name, address, telephone numbers, e-mail addresses, cellphone numbers and other contact information are stored in linked records. The data is stored in non-volatile memory, such as memory 216 in device 10 in a database. In use, the database is organized such that individual contact information can be accessed and cross referenced to other data in the same or other applications.

Location module 222E (which is associated with icon 304E) provides the current geographic location of device 10. In one embodiment, it receives and interprets remote GPS signals from a system of satellites to triangulate the current location of device 10, using GPS unit 242 and applications known in the art. On device 10, a GPS interface application controls the storage of GPS data retrieved by location module 222E. Alternatively, location information may be determined by analyzing encoded data relating to cellular telephone calls executed on device 10. For example, the encoded data stream can be examined to identify the current base station to which device 10 is communicating. As such, device 10 can collect and track data indicating when it is being moved.

Further detail is now provided on an embodiment where a layout of a GUI is adjusted in reaction to a movement of device 10.

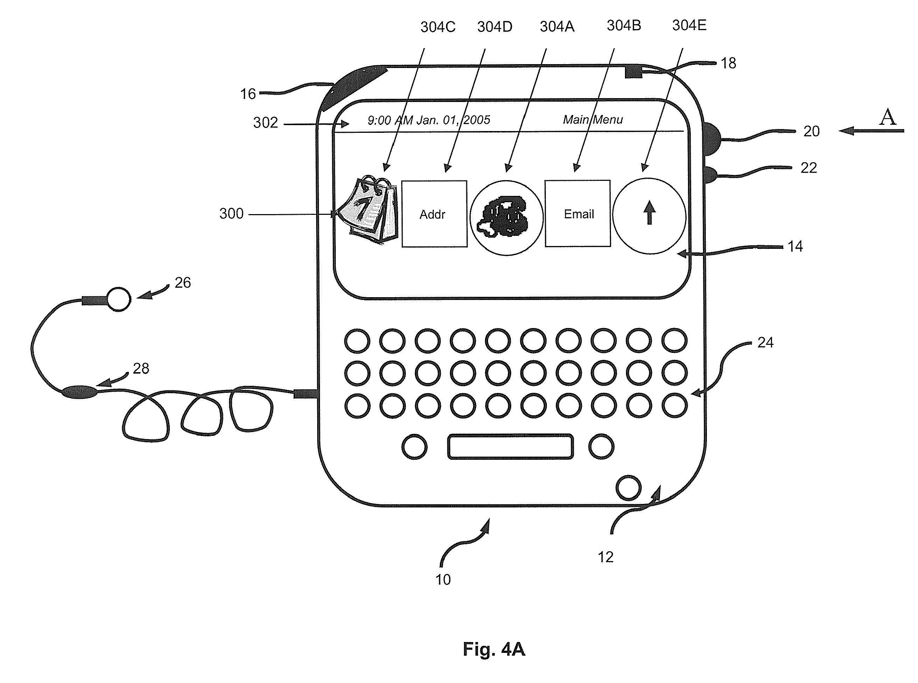

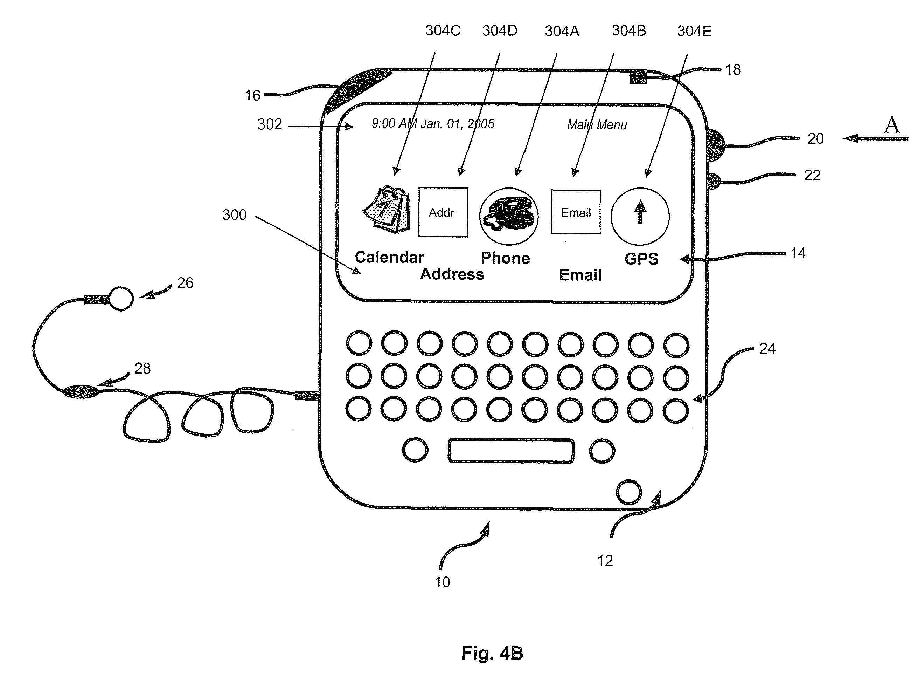

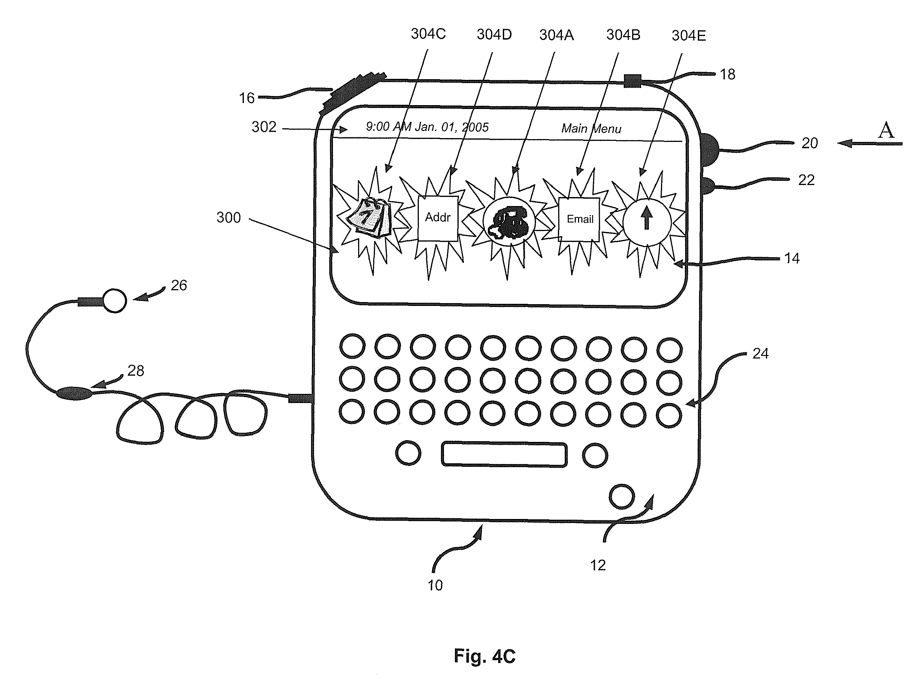

Figs. 4A, 4B and 4C show exemplary adjustments made to one or more elements displayed on a GUIs that are adjusted to accommodate for a movement of device 10 according to options provided, for example from Filter A. In Fig. 4A, icons 304A - 304E are enlarged from their original size in Fig. 3. In Fig. 4B, the text associated with each icon 304A-E is enlarged, but the size of the icon 304 remains the same from that in Fig. 3. In other embodiments, the font of an element may be enlarged, presented in bold and / or italics or capital letters or in another font, when the font is being enlarged. Referring to Fig. 4C, each icon 304A-E is provided with a burst background element to increase the contrast from the background as opposed to the default contrast provided to icons 304A-E in Fig. 3. In other embodiments, the background element may be selected from one or more different geometric shapes, such as circles, squares, etc.; additionally, the background element may flash. Alternatively still, a backlight system (not shown) for display 14 may be activated upon detection of a suitable movement. It will be appreciated that any change to an element that improves its legibility in view of a moving environment may be provided by an embodiment.

It will be appreciated that other variations on adjustments made to icons and other elements can be provided. For example, a "default" display of icons 304, all of the icons would all be displayed on the same screen image on display 14. When some icons 304 are enlarged, it may be that all of the icons 304 cannot be presented on the same screen image at one time. In such an instance, a portion of the full layout of the adjusted icons may be selectively shown on display 14 and the user may be able to navigate to other portions of the full layout by accessing a window navigation elements (such as a scroll bar). As such, some icons 304 may be "dropped" from the main screen once elements are enlarged. Such "dropped" icons would wrap off the screen and the user would have to scroll through the window to the "dropped" icons. Also, a user may arrange application icons in order of usage priority. As such, the icons for the email, phone, and calendar applications may be presented as the first three applications, having enlarged icons.

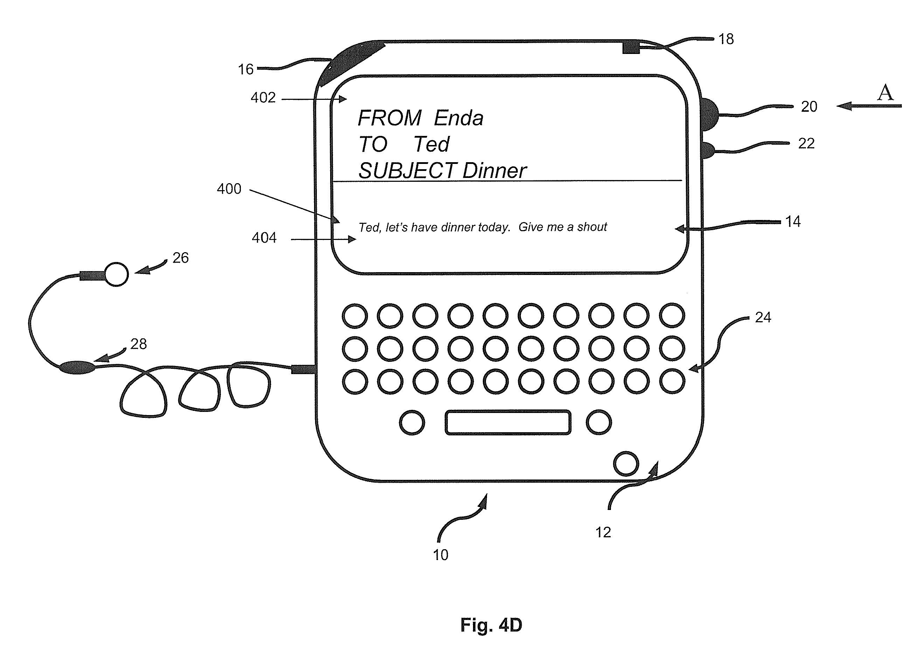

Referring to Fig. 4D, an embodiment also provides specific adjustment to elements for specific applications operating on device 10. Preferably, the most pertinent information of an application is displayed when the device is determined to be moving. For example, in exemplary email application 222B, elements generated on screen 400 may be selectively scaled. For example, when viewing an email, email header information 402 (e.g. "To", "From", and "Subject") may be displayed in a larger than default font, but other aspects of the email, such as body 404, may be displayed in the "normal" font size. It will be appreciated that when a user is moving and the embodiment detects movement of device 10, when the larger font size is generated for the application, the user may be able to more easily see the significant items in the application. Similarly, in an exemplary calendar application 222C, prominence may be provided to elements that have some immediacy to the current time (e.g. meetings scheduled within the next hour) or some urgency associated with them. It will be appreciated that a GUI can be provided to seek, store and retrieve customizations for such preferences for each application.

Displayed element adjustment module 222F obtains movement data provided from movement module 204 and utilizes that data and data relating to the current position of elements in screen 300 to determine whether and what adjustments should be provided to screen 300 to adjust for the current movement of device 10. For the embodiment, movement detection module 204 may comprise trigger circuit 240 and motion sensor 238. Software controlling aspects of movement detection module 204 may be provided that operates on microprocessor 202.

Displayed element adjustment module 222F preferably provides one or more filters providing the user with a GUI on device 10 to define parameters as to how and when to automatically adjust elements on screen 300. In particular, the filters provide fields to define trigger parameters to identify a triggering event to cause the elements to be adjusted. The templates for the filters and the parameters set by the user may be stored in flash memory 216. Further detail is provided on one exemplary filter where GUI filter A allows the user to select one (or more) adjustments models to be implemented:

**Filter A**

| How do you want the appearance of the elements in a screen to appear when the device is moving? (check appropriate boxes): | |
|---|---|
| First, choose a display selection | |
| 1. Do you want to increase the size of the Icons and Text? | |
| 2. Do you want to increase the size of the Icons only? | X |
| 3. Do you want to increase the size of the Text only? | |
| 4. Do you want to change a background of an icon only? | |
| ... (other options may be presented) | |
| Second, choose a level of movement: | |
| 1. Change elements when there is a small movement of the device. | |
| 2. Change elements when there is a significant movement of the device. | X |
| ... (other options may be presented) | |
| Third, choose a reset trigger: | |
| 1. Reset elements to their original size when the movement stops. | |
| 2. Reset elements after Time minutes. | X |
| 3. Don't reset the elements. | |
| ... (other options may be presented) | |

Alternatively, the embodiment may reset the adjustment to elements if no movement is detected for a preset (perhaps "short") period of time. It will be appreciated that when adjusting the presentation of an element to reflect the movement of device 10, the adjustment may be progressive and / or paced, i.e. any adjustments may be delayed by a few seconds and then implemented to scale up or down rather than implementing an abrupt switch between presentations of the elements.

The filter has three sections of options: the first section allows the user to choose how he wants the elements to be adjusted; the second allows the user to choose how the user wants to rank the icons of the applications; and the third allows the user to define when or whether the elements are changed back to their original size. For the first section, an "X" has been entered in the second choice (enlarge icons only); for the second section, an "X" has been entered to change the size of the icons, only when a "significant" movement is detected; for the third section, an "X" has been entered to reset the icons after "Time" minutes, the value of which can be entered by the user into the GUI. Additional options for each section may be provided as per functional capabilities or needs of the user. Once the options are selected, the values of the options are stored in local memory. In other embodiments, the filter may be presented and managed by another application operating on device 10.

After a filter is selected, completed and saved, displayed element adjustment module 222F extracts the parameters from the filter and establishes a monitor to detect movement of device 10. Thereafter, when a triggering event is detected that matches the parameters, the elements of the screen 300 are adjusted accordingly.

Another function of displayed element adjustment module 222F is to establish a baseline movement for device 10. This baseline movement can be used to determine a current level of movement that will be considered as a "resting" position for device 10 (e.g. the average movement of device 10 for the past ten minutes). This baseline movement value can then be used as an offset to determine when a significant movement exceeding the baseline has been detected.

The baseline position may be used when device 10 is at rest and subsequently redefined when device 10 is placed in a new resting position. For example, after setting a baseline, if device 10 is subsequently used while in a car or while the user is jogging, there may be a certain amount of ambient movement detected for device 10. One mode of an embodiment can be to adjust the elements in the screen with the subsequent movement information. Thereafter, device 10 can determine an average "baseline" movement signal for when device 10 is at "rest" (i.e. a normalized net resting position for its current environment).

In an embodiment, a general configuration setting may be provided to selectively enable or disable the moving display profile. Also, a configuration setting for specifying the scale factor for the movement profile may be provided.

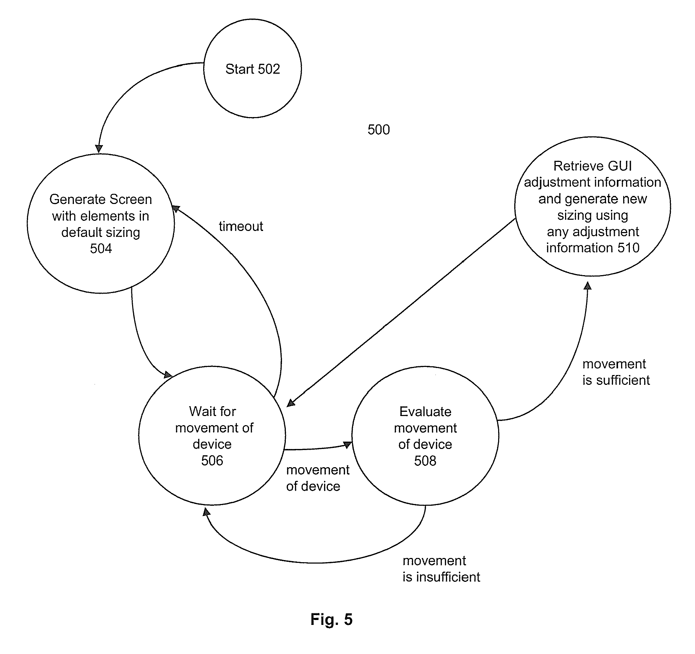

Referring to Fig. 5, process 500 is shown as a state diagram of an exemplary progression of activities, shown as states, as displayed element adjustment module 222F evaluates the current position of elements in a particular GUI and changes to the movement of device 10 to determine whether changes should be made to the position of the elements. Displayed element adjustment module 222F may be an interrupt-based procedure, a polling based procedure or may be incorporated into one or more applications 222 themselves. Displayed element adjustment module 222F can send and receive status messages to other applications 222 on device 10.

Process 500 begins at step 502, where displayed element adjustment module 222F is started. It may be a subroutine within an application or a separately operating application on device 10. Its initial function is preferably to generate a screen with (the required elements, icons, text and background(s)) in a default in a default size at step 504. Data relating to the size of the elements in screen 300 is stored in memory 216 or 218. Next, module 222F progresses to state 506, where it waits for a movement of device 10. If a movement has been detected, application moves to state 508 where the application determines the scope of the movement after analyzing the movement data from the sensors or circuit 240. Thereafter if the movement is sufficiently large, application moves to state 510, where a new screen is generated, where icons 304, text and / or background 306 and / or any dialog boxes are selectively redrawn and enlarged in screen 300 according to any default resizing or setting provided by the user, for example in Filter A. The specific new icons / text / backgrounds may be retrieved from a library data and / or files of such elements stored in the memory of device 10. Thereafter, module 222F returns to state 506. If device 10 continues to be moved, then the size of the adjusted elements may or may not be enlarged again. It is notable that if device 10 stops moving and remains unmoved for a set period of time, the presentation of the enhanced elements can selectively be reset to their default presentation by module 222F as indicated by the timeout arrow connecting state 506 to state 504. Other variations in the order and flow of these steps may be provided.

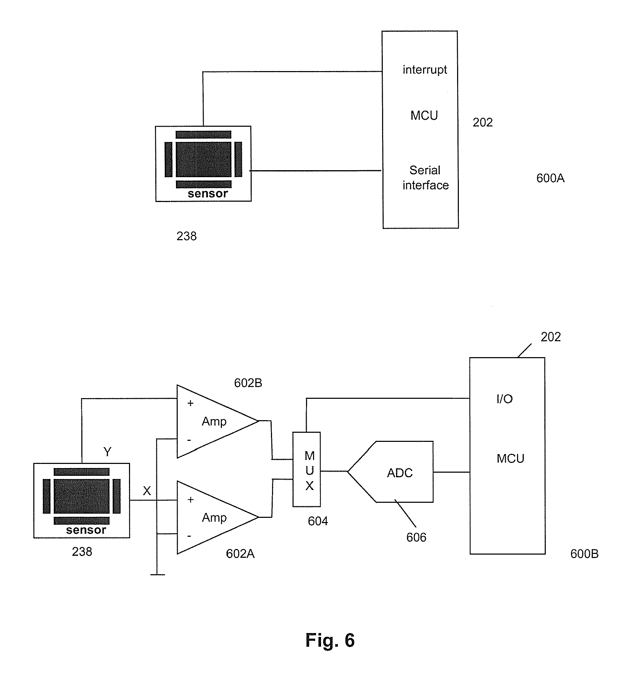

Referring to Fig. 6, further detail is provided on the movement detection module 204 and its related components. Therein, two sensors arrangements for device 10 are shown. Circuit 600A shows sensor 238 directly connected to the interrupt and serial interface input lines of microprocessor 202. Accordingly, software operating on microprocessor 202 is provided to selectively monitor signal(s) from sensor 238 to determine whether a notable movement of device 10 has been detected. The circuit between sensor 238 and microprocessor 202 can be considered to be one version of circuit 240. Software operating on microprocessor 202 determines when a notable signal has been generated by sensor 238. Circuit 600B shows sensor 238 connected to trigger circuit 240A having two differential comparators 602A and 602B, which then have their outputs attached to an analog mux 604. The mux selectively provides its output according to a control signal generated by microprocessor 202. The analog output of mux 604 is converted to a set of digital signals by analog to digital converter 606, which then provides the output to microprocessor 202. As with other implementation, software operating on microprocessor 202 determines when a notable signal has been generated by sensor 238. Reading of positions determined by the software can be stored in memory 218 or 216. The software can also create an average reading of the movement readings. This average reading can be used to determine when device 10 is in a resting position or when it is effectively in a resting position (e.g. it is being moved only in inconsequential amounts).

For any embodiment, a low-g MEMS (micro-electromechanical system) accelerometer may be used for motion sensor 238. Further, the accelerometer may be of almost any type, including a capacitive, piezoelectric, piezoresistive, or a gas-based accelerometer. An exemplary low-g MEM accelerometer is a LIS3L02AQ tri-axis analog accelerometer, available from STMicroelectronics of Geneva, Switzerland. Accelerometers sense and convert an acceleration detected from a motion (e.g. tilt, inertial, or vibration) or gravity into an electrical signal (producing a corresponding change in output) and are available in one, two or three axis configurations. Accelerometers may produce digital or analog output signals.

To improve sensitivities of an accelerometer when it is used as motion sensor 238, its outputs can be calibrated to compensate for individual axis offset and sensitivity variations. Calibrations can also be performed by collecting a large set of measurements with the device in different orientations.

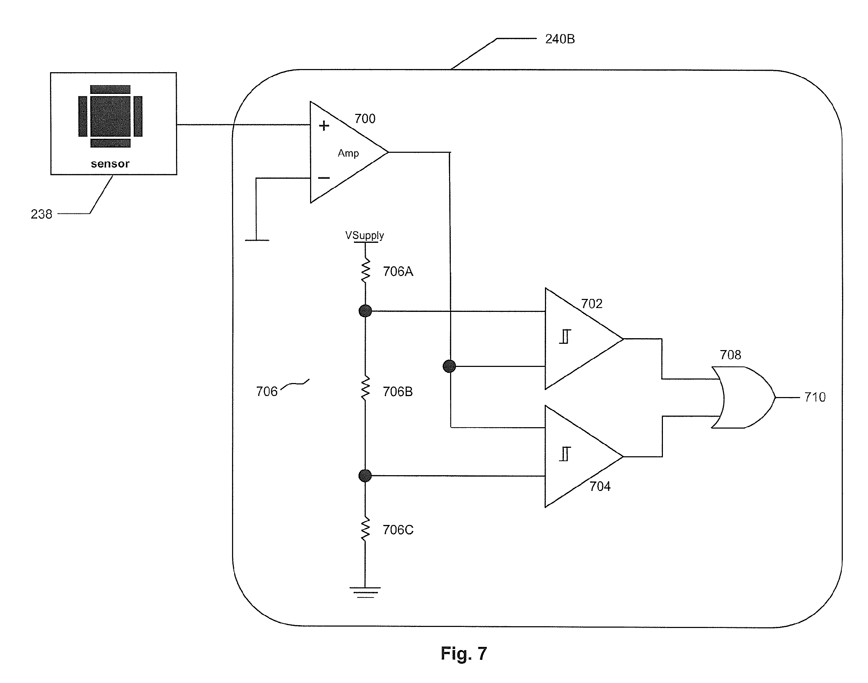

Referring to Fig. 7, an alternative circuit 240B is shown for sensor 238 which is aligned as a single axis analog sensor. Sensor 238 can be oriented such that its output detects movement along a desired axis (e.g. 'Z' axis detecting when device moved vertically). Additional axes may be monitored by replicating circuit 240B for each additional axis. Briefly, the output of sensor 238 is provided to buffer amp 700. The output of buffer amp 700 is provided in tandem to comparators 702 and 704. The other inputs of comparators 702 and 704 are taken from different taps on resistor ladder 706, comprising resistors 706A, 706B and 706C. Comparators 702 and 704 each produce upper and lower limit comparison signals for the output of sensor 238. If the value of the signal from sensor 238 is either above the upper limit set by the parameters of comparator 702 (comparing the signal from sensor 238 against its tap from the resistor ladder 706) or below the lower limit set by the parameters of comparator 704 (comparing the signal from sensor 238 against its tap from the resistor ladder 706) then OR gate 708 generates a trigger signal 710. It will be appreciated that the limits can be used to define a range of signals detected by sensor 238 representing when be device 10 is either stationary (e.g. at rest) or being moved.

It will be appreciated that other circuits using different combinations of sensors and triggering components and threshold detectors may be used to provide functionalities of sensor 238 and circuit 240.

In other embodiments, motion sensor 238 may be substituted or combined with a different device, such as a spring-loaded switch, a tilt switch, a gyroscope, a mercury switch, a GPS unit or any other device which can generate a signal responsive to movement or change in orientation of device 10. It is preferable that the device have low quiescent power draw characteristics.

As an embodiment may have GPS unit 242 and / or location module 222E, these components can be also used to provide data relating to the current geographic location of device 10. By tracking for changes in the geographic location of device 10, an embodiment can determine whether or not device 10 is moving or is stationary. Displayed element adjustment module 222F may be provided with suitable software to monitor signals from location module 222E and / or GPS unit 242 to determine whether device 10 is moving or not. If module 222F determines that device 10 is moving, then it can adjust an element on display 14 in a manner as described earlier. Similarly, the element may be readjusted after a predetermined amount of time has passed and no further movement is detected.

In the above embodiments, sizes of elements are provided by static files and static data relating to the size of elements (e.g. font size). In other embodiments, where elements are allowed to be dynamically scaled, then adjustment of the size of elements may be provided by using a scaling factor to appropriately increase or decrease the size of elements as required. Such scaling information can be preset to certain values for fonts, icons, backgrounds etc. and store in memory 216.

The present invention is defined by the claims appended hereto, with the foregoing description being merely illustrative of a preferred embodiment of the invention. Those of ordinary skill may envisage certain modifications to the foregoing embodiments which, although not explicitly discussed herein, do not depart from the scope of the invention, as defined by the appended claims.

## Claims

1. A display management system for an element displayed on a display of an electronic device, comprising:
a sensor;
a movement detection module connected to said sensor providing a movement signal indicating a notable signal from said sensor; and
a displayed element adjustment module for generating said element on said display in a larger size after processing said movement detection signal.

2. The display management system as claimed in claim 1, wherein:
said displayed element adjustment module re-adjusts said element to a smaller size from the larger size after a reset event.

3. The display management system as claimed in claim 2, wherein said reset event is a passage of a predetermined amount of time.

4. The display management system as claimed in any one of the preceding claims, wherein said element is an icon.

5. The display management system as claimed in claim 4, wherein said displayed element adjustment module also adjusts a font size of text associated with said icon to a larger font size after processing said movement detection signal.

6. The display management system as claimed in claim 4 or claim 5, wherein said displayed element adjustment module also adjusts a background feature associated with said icon to after processing said movement detection signal.

7. The display management system as claimed in claim 6, wherein said displayed element adjustment module also re-adjusts said larger font size and/or said background feature after said reset event.

8. The display management system as claimed in any one of the preceding claims, further comprising:
a graphical user interface 'GUI' module to allow a user to set parameters for adjusting and/or re-adjusting said element.

9. The display management system as claimed in any one of the preceding claims, wherein the sensor is a motion sensor.

10. The display management system as claimed in any one of the preceding claims, wherein said displayed element adjustment module further controls a backlight for said display.

11. The display management system as claimed in any one of claims 1 to 8 or 10, wherein the sensor is a global position system sensor.

12. A method for adjusting presentation of an element displayed on a display of an electronic device, comprising:
monitoring for a notable movement of said device; and
when said notable movement has been detected, generating said element in a larger size on said display after processing said movement detection signal.

13. The method as claimed in claim 12, further comprising:
re-adjusting said element to a smaller size from the larger size after a reset event.

14. The method as claimed in claim 13, wherein said reset event is a passage of predetermined amount of time.

15. The method as claimed in any one of claims 12 to 14, wherein said element is an icon.

16. The method as claimed in claim 15, further comprising:
adjusting a font size of text associated with said icon to a larger font size after processing said movement detection signal.

17. The method as claimed in claim 15 or claim 16, further comprising:
adjusting a background feature associated with said icon after processing said movement detection signal.

18. A portable electronic device comprising:
a display; and
a display management system as claimed in any one of claims 1 to 11 for adjusting presentation of an element displayed on said display.

19. A computer readable medium embodying program code executable by a processor of a computing device for causing said computing device to perform the method of any one of claims 12 to 17.

## Amended claims

### Amended claims in accordance with Rule 137(2) EPC.

**1.** A display management system for an element (304) displayed on a display (14) of an electronic device (10) to provide an adjusted size for said element responsive to a movement of said device, comprising:
a sensor (238, 242) providing a sensor signal responsive to a movement of said device;
a movement detection module (204) connected to said sensor analyzing said sensor signal and providing a movement detection signal when said sensor signal is determined to represent a significant movement of said device;
a graphical user interface module for generating said element on said display in a default size; and
a displayed element adjustment module (222F) for changing the size of said element to a larger size for generation on said display after receiving said movement detection signal.

**2.** The display management system as claimed in claim 1, wherein:
said displayed element adjustment module (222F) re-adjusts said element (304) to a smaller size from the larger size after a reset event.

**3.** The display management system as claimed in claim 2, wherein said reset event is a passage of a predetermined amount of time.

**4.** The display management system as claimed in any one of the preceding claims, wherein said element is an icon (304).

**5.** The display management system as claimed in claim 4, wherein said displayed element adjustment module (222F) also adjusts a font size of text associated with said icon (304) to a larger font size after receiving said movement detection signal.

**6.** The display management system as claimed in claims 4 or 5, wherein said displayed element adjustment module (222F) also adjusts a background pattern associated with said icon (304) to after receiving said movement detection signal.

**7.** The display management system as claimed in any one of claims 1 to 3, wherein said element is a text.

**8.** The display management system as claimed in any one of claims 1 to 3, wherein said element is a background pattern.

**9.** The display management system as claimed in any one of the preceding claims, wherein said displayed element adjustment module (222F) changes the size of the element (304) to a further larger size after receiving a further movement detection signal from said movement detection module (204).

**10.** The display management system as claimed in claim 9, wherein said displayed element adjustment module (222F) re-adjusts said further larger size of said element (304) to one of said larger size or said smaller size after said reset event.

**11.** The display management system as claimed in any one of the preceding claims, further comprising:
a graphical user interface module to allow a user to set parameters for adjusting and/or re-adjusting said element (304).

**12.** The display management system as claimed in any one of the preceding claims, wherein the sensor is a motion sensor (238).

**13.** The display management system as claimed in any one of the preceding claims, wherein said displayed element adjustment module (222F) further controls a backlight for said display (14).

**14.** The display management system as claimed in any one of the preceding claims, wherein a baseline movement is set from which to evaluate said movement detection signal.

**15.** The display management system as claimed in any one of the preceding claims, wherein said baseline movement is determined from an average of a set of movement detection signals.

**16.** The display management system as claimed in any one of claims 1 to 11 or 13 to 15, wherein the sensor is a global position system sensor (242).

**17.** A method for adjusting presentation of an element (304) displayed on a display (14) of an electronic device (10) to provide an adjusted size for said element responsive to a movement of said device, comprising:
generating said element on said display in a default size in a graphical user interface; monitoring for a significant movement of said device; and
when said significant movement has been detected, generating said element in a larger size on said display.

**18.** The method as claimed in claim 17, further comprising:
re-adjusting said element (304) to a smaller size from the larger size after a reset event.

**19.** The method as claimed in claim 18, wherein said reset event is a passage of predetermined amount of time.

**20.** The method as claimed in any one of claims 17 to 19, wherein said element is an icon (304).

**21.** The method as claimed in claim 20, further comprising:
adjusting a font size of text associated with said icon (304) to a larger font size when said significant movement has been detected.

**22.** The method as claimed in any one of claims 17 to 21, further comprising:
adjusting a background pattern associated with said icon (304) when said significant movement has been detected.

**23.** The method as claimed in any one of claims 17 to 19, wherein said element is text.

**24.** The method as claimed in any one of claims 17 to 19, wherein said element is a background pattern.

**25.** The method as claimed in any one of claims 17 to 24, further comprising:
further adjusting the size of the element (304) to a further larger size after a further significant movement has been detected.

**26.** The method as claimed in any one of claims 17 to 25, further comprising utilizing a baseline movement value from which to evaluate movement of said device (10) as being said significant movement.

**27.** The method as claimed in claim 26, wherein said baseline movement is determined from an average of a set of movement detection signals.

**28.** A portable electronic device (10) comprising:
a display (14); and
a display management system as claimed in any one of claims 1 to 16 for adjusting presentation of an element (304) displayed on said display.

**29.** A computer readable medium (216, 218) embodying program code executable by a processor (202) of a computing device (10) for causing said computing device to perform the method of any one of claims 17 to 27.
